Europäisches Patentamt

European Patent Office

Office européen des brevets

(19)

(11) Veröffentlichungsnummer: **0 459 078 A2**

# (12) EUROPÄISCHE PATENTANMELDUNG

(21) Anmeldenummer: **91100307.7**

(22) Anmeldetag: **11.01.91**

(51) Int. Cl.5: **F41G 7/22**

(30) Priorität: **30.05.90 DE 4017353**

(43) Veröffentlichungstag der Anmeldung:
**04.12.91 Patentblatt 91/49**

(84) Benannte Vertragsstaaten:
**DE FR SE**

(71) Anmelder: **Rheinmetall GmbH**
**Ulmenstrasse 125 Postfach 6609**
**W-4000 Düsseldorf(DE)**

Anmelder: **TZN Forschungs- und**
**Entwicklungszentrum Unterlüss GmbH**
**Neuensothriether Strasse 20**
**W-3104 Unterlüss(DE)**

(72) Erfinder: **Opitz, Hans-Peter, Dr.**
**Altenkamp 58**
**W-4030 Ratingen 4(DE)**
Erfinder: **Paech, Joachim, Dr.**
**Peter-Rosegger-Strasse 158**
**W-4006 Erkrath(DE)**
Erfinder: **Aulenbacher, Uwe, Dr.**
**Am Tiergarten 2a**
**W-3100 Celle(DE)**

(74) Vertreter: **Podszus, Burghart, Dipl.-Phys.**
**Rheinmetall GmbH Ulmenstrasse 125**
**Postfach 6609**
**W-4000 Düsseldorf(DE)**

(54) **Flugkörper mit einer Zieldetektionseinrichtung.**

(57) Die Erfindung betrifft Flugkörper mit einer Zieldetektionseinrichtung zum Abtasten eines Zielgebietes, wobei ein erster Umlenkspiegel (110) auf einer aus dem Flugkörper (1) herausbewegbaren Halterung (11) angeordnet ist, um die vom Ziel kommende Strahlung (12') zur Detektionseinrichtung (18) hin zu reflektieren.

Um einerseits ein das Zielgebiet räumlich gut auflösendes System zu gewährleisten, andererseits aber einen möglichst flachen Aufbau der Halterung (11) zu verwenden, sowie zu vermeiden, daß die elektrischen Komponenten und Anschlüsse beim Herausbewegen der Halterungen mit verschoben werden müssen, wird vorgeschlagen, als Zieldetektionseinrichtung ein kombiniertes Lasersende/-empfangssystem zu benutzen. Dabei sind der Laser (16) und der Laserlichtdetektor (18) ortsfest in dem Flugkörper (1) angeordnet. Auf der Halterung (11) befindet sich ein zweiter Umlenkspiegel (111), der im herausbewegten Zustand der Halterung (11) die Umlenkung der von dem Laser (16) kommenden Strahlung (12) bewirkt.

FIG.3

EP 0 459 078 A2

Die Erfindung betrifft einen Flugkörper, wie er durch die Merkmale des Oberbegriffs des Anspruchs 1 näher definiert wird.

Ein derartiger Flugkörper ist beispielsweise aus der DE 33 26 876-C2 bekannt. Es handelt sich dabei um einen Submunitionskörper, bei dem die IR-Zieldetektionseinrichtung, welche sowohl die Optik als auch die Sensorik enthält, auf einer herausbeweglichen Halterung angeordnet sind. Dieser Aufbau weist den Nachteil auf, daß elektrische Komponenten (Sensoren) sowie der evtl. benötigte thermische Kühler und deren Anschlüsse verschoben werden müssen. Die gesamte Halterung mit Optik und Sensorik weist einen relativ voluminösen Aufbau auf. Außerdem ist lediglich die Detektion von Zielen möglich, die IR-Strahlung abgeben. Sogenannte kalte Ziele können nicht entdeckt werden.

Aus der DE 34 28 051-A1 ist ein Submunitionskörper bekannt, der einen Millimeterwellensensor mit ausklappbarer Antenne beinhaltet. Einen Hinweis darauf, wie dieses System für IR-Zieldetektionseinrichtungen, insbesondere für aktive Detektionseinrichtungen, verwendet werden könnte, läßt sich dieser Schrift nicht entnehmen. Nachteilig bei derartigen Zieldetektionseinrichtungen ist vor allem, daß eine genaue räumliche Auflösung des Zieles in der Regel nicht möglich ist.

Ausgehend von der vorstehend erwähnten DE 33 26 876-C2 liegt daher der Erfindung die Aufgabe zugrunde, einen Flugkörper mit einer Zieldetektionseinrichtung der eingangs erwähnten Art zu entwickeln, bei dem die Optik einen flachen Aufbau aufweist und bei dem elektrische Komponenten (Sensoren) und deren Anschlüsse sowie der evtl. erforderliche Kühler beim Herausbewegen der Halterung nicht verschoben werden müssen. Außerdem soll das Ziel räumlich gut aufgelöst werden.

Diese Aufgabe wird erfindungsgemäß durch die Merkmale des kennzeichnenden Teiles des Anspruchs 1 gelöst.

Weitere Vorteile der Erfindung ergeben sich aus den Unteransprüchen.

Der Erindung liegt also die Idee zugrunde, die Detektoren modular von der eigentlichen Optik zu trennen. Lediglich die aus den Umlenkspiegeln bestehende Optik befindet sich auf der Halterung und wird aus dem Geschoß herausbewegt.

Durch die Verwendung eines kombinierten Lasersende-/empfangssystems ist es möglich, das Zielgebiet sehr genau abzutasten. Dabei wird vorzugsweise der Abstand zwischen Flugkörper und Zielgebiet gemessen und ein Abstands- oder Höhenprofil ermittelt und mit zeitlich vorher gemessenen Werten verglichen. Die extrahierte Information wird dann mit abgespeicherten Signalen verglichen.

Weitere Einzelheiten und Vorteile der Erfindung werden im folgenden anhand eines Ausführungsbeispieles und mit Hilfe von Figuren näher beschrieben.

Es zeigen:

Fig. 1   schematisch einen Submunitionskörper mit herausgeklappter Antenne bei Abtastung des Zielgebietes;

Fig. 2   einen erfindungsgemäßen Submunitionskörpers gemäß Fig. 1, mit eingeklappten Umlenkspiegeln, und

Fig. 3   einen Ausschnitt des in Fig. 2 dargestellten Submunitionskörpers mit herausgeklappten Umlenkspiegeln.

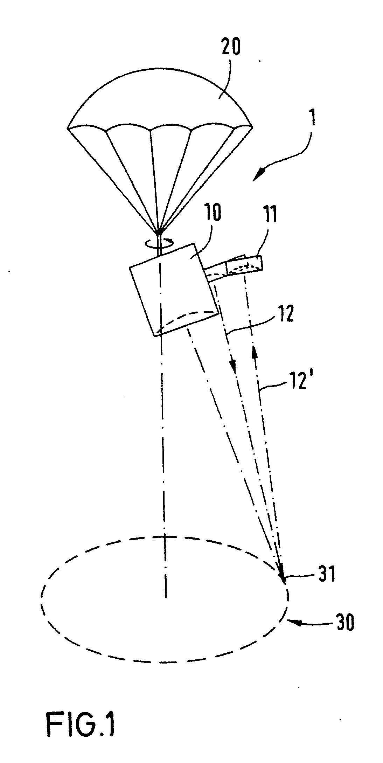

In Fig. 1 ist mit 1 ein Submunitionskörper bezeichnet, der im wesentlichen aus einem Geschoßkörper 10 besteht, welcher im vorliegenden Fall an einem Fallschirm hängt und rotiert. Aus dem Geschoßkörper 10 ist eine Haltevorrichtung 11 herausgeschoben, an der die im einzelnen nicht bezeichneten Umlenkspiegel befestigt sind. Die von einer im Geschoßkörper 10 befindlichen IR-Quelle stammenden Strahlung 12 gelangt auf das abzutastende Gebiet, wird dort reflektiert und die reflektierte Strahlung 12' gelangt über einen entsprechenden Umlenkspiegel auf der Halterung 11 in das Geschoß zur weiteren Verarbeitung.

Das Zielgebiet wurde mit 30 und die Abtastbahn des IR-Strahles 12 mit 31 bezeichnet.

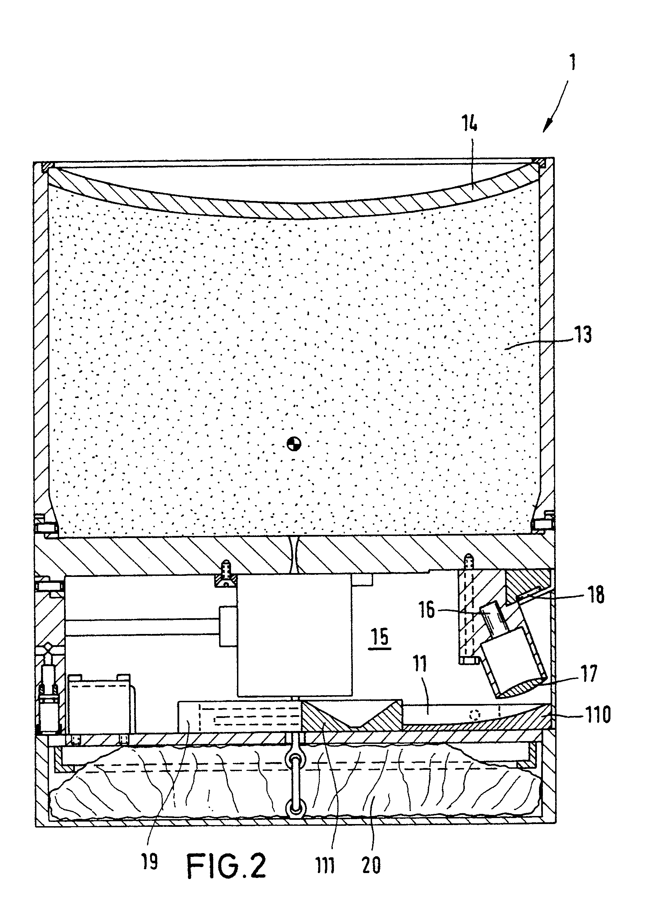

In Fig. 2 ist ein erfindungsgemäßer Submunitionskörper dargestellt, bei dem sich der Fallschirm 20 noch nicht geöffnet hat und sich die Halterung 11 im Inneren des Geschoßkörpers befindet. Im wesentlichen enthält der Geschoßkörper 10 Sprengstoff 13 sowie eine in Zielrichtung vor dem Sprengstoff 13 angeordnete projektilbildende Einlage 14. Im heckseitigen Teil des Geschoßkörpers befindet sich eine nicht im einzelnen dargestellte Elektronik 15 sowie der Laser 16, ein Linsensystem 17 und ein Laserdetektor 18. Auf der Halterung 11 sind der die Reflexion der empfangenden IR-Strahlung 1 bewirkende Spiegel 110 und der die Laserstrahlung auf das Ziel umlenkende Spiegel 111 angeordnet. Außerdem befindet sich im Inneren des Geschoßkörpers 10 ein nur schematisch dargestellter pyrotechnischer Antrieb 19, der bewirkt, daß zu gegebener Zeit die Haltevorrichtung mit den Umlenkspiegeln 110 und 111 aus dem Geschoß herausgeschoben wird.

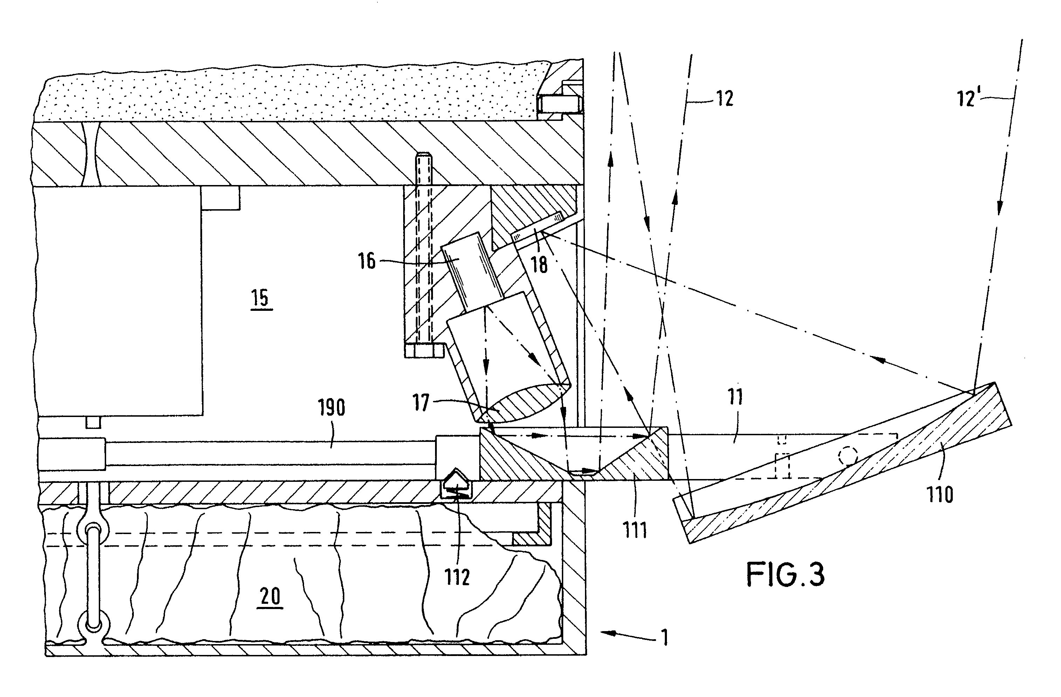

Fig. 3 zeigt die aus dem Geschoß herausbewegte Halterung 11. Das Herausschieben der Halterung 11 erfolgt im vorliegenden Beispiel mit Hilfe eines Stempels 190, der mit dem pyrotechnischen Antrieb 19 verbunden ist. Selbstverständlich sind auch andere Antriebsmöglichkeiten denkbar, z. B. kann statt eines pyrotechnischen Antriebes auch eine Feder benutzt werden. In der Endstellung der Halterung rastet ein federbelaster Sperrbolzen 112 in die Halterung 11 ein und arretiert somit letztere. Der Spiegel 110 für die zu empfangenden IR-Strahlen 12' ist drehbar angeordnet. Die Verdrehung des Spiegels 110 kann beispielsweise mit Hilfe einer nicht dargestellten Zylinderfeder erfolgen. Sobald der Spiegel 110 seine vorgegebene Endposition erreicht, erfolgt die Arretierung entweder wiederum durch einen ebenfalls nicht dargestellten Federbolzen, oder aber durch einen an der Halterung 11 angeordneten Anschlag.

Wie die Fig. 2 und 3 zeigen, ist sowohl die Laserdiode 16, deren Strahlung über die Optik 17 auf den Spiegel 111 gelenkt wird, als auch der Laserdetektor 18, fest in dem Geschoß angeordnet.

Das Lasersystem besteht vorzugsweise aus Halbleiterlaserdioden, deren charakteristische Wellenlänge um 1 $\mu$m liegt. Es kommen aber auch Laser im 3 - 5 $\mu$m Bereich in Frage. Der Laser wird gepulst betrieben. Die Taktrate beträgt dabei ca. 1 - 10 KHz. Die Pulsausgangsleistung liegt bei ≤ 50 Watt.

Im folgenden wird näher auf die Wirkungsweise der Erfindung eingegangen: Das rotierende Lasersende-/-empfangssystem (Laserentfernungsmesser) tastet unter einem festen Blickwinkel die Landschaft ab. Beim Überstreichen eines Ziels entsteht ein charakteristischer Höhensprung, der durch den Laserentfernungsmesser registriert wird.

Aufeinanderfolgende Meßdaten ergeben ein typisches Profil. Für eine hochauflösende Entfernungsmessung muß die Pulsanstiegeszeit ≤ 1ns sein.

Für die Extraktions, beispielsweise eines Panzerhöhenprofiles, aus den aufgenommenen Daten wird aus den Entfernungsdaten der letzten 10 bis 100 Messungen ein extrapolierter Schätzwert für die nächsten unmittelbar bevorstehenden Meßdaten ermittelt. Aus der Differenz zwischen dem aktuell gemessenen und dem geschätzten Wert ergibt sich dann das Höhenprofil. Die extrahierte Information wird mittels eines Korrelators mit abgespeicherten Signaturen verglichen oder anhand von globalen Merkmalen (wie Zeitdauer, Intensität, Entfernungsdifferenz) klassifiziert. Aus diesem Resultat läßt sich ggf. unter Mitwirkung weiterer Sensoren eine Identifikation des Panzers vornehmen.

Bezugszeichenliste

| 1 | Submunitionskörper |
|---|---|
| 10 | Geschoßkörper |
| 11 | Halterung |
| 12 | zum Ziel abgestrahlte IR-Strahlung |
| 12' | vom Ziel kommende IR-Strahlung |
| 13 | Sprengstoff |
| 14 | Einlage |
| 15 | Elektronik |
| 16 | Laserdiode |
| 17 | Linsensystem |
| 18 | Laserdetektor |
| 19 | (pyrotechnischer) Antrieb |
| 20 | Fallschirm |
| 30 | Zielgebiet |
| 31 | Abtastbahn |
| 110 | erster Umlenkspiegel |
| 111 | zweiter Umlenkspiegel |
| 190 | Stempel |

**Patentansprüche**

1. Flugkörper (1) mit einer Zieldetektionseinrichtung zum Abtasten eines Zielgebietes, wobei ein erster Umlenkspiegel (110) auf einer aus dem Flugkörper (1) herausbewegbaren Halterung (11) angeordnet ist, um die vom Ziel kommende Strahlung (12') zur Detektionseinrichtung (18) hin zu reflektieren, **dadurch gekenn zeichnet**, daß es sich bei der Zieldetektionseinrichtung um ein kombiniertes Lasersende-/-empfangssystem handelt, daß der Laser (16) und der Laserlichtdetektor (18) ortsfest in dem Flugkörper (1) angeordnet sind, und daß sich auf der Halterung (11) ein zweiter Umlenkspiegel (111) befindet, der im herausbewegten Zustand der Halterung (11) die Umlenkung der von dem Laser (16) kommenden Strahlung (12) bewirken soll.

2. Flugkörper nach Anspruch 1, **dadurch gekennzeichnet**, daß der erste Umlenkspiegel (110) drehbar in der Halterung (11) angeordnet ist.

3. Flugkörper nach Anspruch 1 oder 2, **dadurch gekennzeichnet**, daß der zweite Umlenkspiegel (111) der im herausbewegten Zustand der Halterung (11) dem Flugkörper (1) nächste Spiegel ist.

4. Flugkörper nach einem der Ansprüche 1 bis 3, **dadurch gekennzeichnet**, daß der Laser (16) gepulst betrieben und das Lasersende-/-empfangssystem als Entfernungsmesser zur Ermittlung des Abstandsprofiles des Zielgebietes (30) verwendet wird.

FIG.1

FIG.2

FIG.3

EP 0 459 078 A2